# FASCICULE DE BREVET EUROPEEN

(11) **EP 0 522 049 B1**
(45) Date de publication et mention de la délivrance du brevet: **01.06.1994**
(21) Numéro de dépôt: 91907394.0
(22) Date de dépôt: 02.04.1991
(51) Int. Cl.: F16L 1/16, B63B 35/44, B63B 22/02

(54) **PROCEDE DE POSE DE CONDUITES TUBULAIRES**
VERFAHREN ZUM VERLEGEN VON ROHRFÖRMIGEN LEITUNGEN
METHOD FOR LAYING TUBULAR CONDUITS

(30) Priorité: 30.03.1990 FR 9004099
(43) Date de publication de la demande: 13.01.1993
(73) Titulaire: COFLEXIP, 92100 Boulogne-Billancourt (FR)
(72) Inventeur: MALOBERTI, René, F-94500 Champigny (FR); COUTAREL, Alain, F-75007 Paris (FR); ESPINASSE, Philippe, Houston, TX 77077 (US)
(74) Mandataire: Nony, Michel
(86) Numéro de dépôt international: FR9100261
(87) Numéro de publication internationale: WO9115695

(56) Documents cités:
- FR-A- 2 271 482
- US-A- 4 065 822
- US-A- 4 573 425

## Description

L'invention se rapporte à un procédé de pose d'une canalisation formée de conduites tubulaires rigides et flexibles raccordées.

Les conduites tubulaires rigides présentent l'avantage d'un coût linéaire relativement modéré. Elles présentent l'inconvénient d'une mise en oeuvre difficile. Notamment leur pose est longue et coûteuse. La pose de conduites tubulaires rigides est effectuée en utilisant un support flottant notamment des barges de faible manoeuvrabilité. Ces barges ne comportent que rarement des dispositifs de positionnement dynamique. Il leur est donc interdit de pénétrer dans certaines zones comportant des plate-formes de forage ou d'exploitation de champs pétroliers. Un procédé de pose de telles conduites tubulaires rigides est décrit par exemple dans GB-A-1204715.

Les conduites tubulaires flexibles sont d'un coût au mètre plus élevé. Par contre, leur mise en oeuvre est extrêmement rapide. La demanderesse utilise pour leur pose des bateaux à positionnement dynamique. Ces navires ne permettent pas normalement la manipulation de conduites tubulaires rigides.

Le procédé selon la présente invention utilise les avantages respectifs de chaque type de conduite. Le raccordement de conduites flexibles et de conduite tubulaires rigides peut être justifié par la présence d'un réseau de conduites tubulaires rigides existant ou par les performances possibles des dispositifs de pose de conduites flexibles.

Selon la présente invention, il est avantageux d'utiliser les équipements de pose de conduites tubulaires rigides et notamment les barges de pose de conduites tubulaires rigides, pour poser une faible longueur de conduite tubulaire flexible raccordée par une extrémité à l'extrémité terminale de la conduite tubulaire rigide. La longueur de conduite tubulaire flexible est supérieure à la profondeur de l'eau. Ainsi, une fois que l'extrémité de la conduite tubulaire rigide repose sur le fond de l'eau, on dispose encore sur la barge de pose de conduite tubulaire rigide de la deuxième extrémité de la conduite tubulaire flexible. Cette extrémité est, par exemple pour une reprise ultérieure de la pose, transbordée à bord d'un second support flottant tel qu'un navire de pose de conduites tubulaires flexibles. Le navire de pose de conduites tubulaires flexibles continue la pose de la conduite tubulaire flexible. Il permet une pose rapide et sûre et notamment l'approche de sites encombrés dans la mesure où il est, avantageusement, équipé d'un dispositif de positionnement dynamique.

Dans une variante du procédé selon la présente invention on utilise des dispositifs peu encombrants et d'un coût faible pour effectuer la pose de la conduite tubulaire flexible à partir de la barge de pose des conduites tubulaires rigides. Un tel équipement comporte deux pinces dont on peut commander l'ouverture et la fermeture; une pince est fixe, une pince est mobile. Un tel équipement présente l'avantage de ne pas encombrer la barge qui est principalement destinée à la pose de conduites tubulaires rigides. Il présente l'inconvénient d'être lent. Toutefois, dans la mesure où il ne sert qu'à poser une faible longueur de la conduite tubulaire flexible, ce dispositif ne ralentit que dans une très faible mesure les opérations de pose des conduites tubulaires. Toutefois, il est bien entendu que l'utilisation des moyens tensionneurs classiques pour la pose de conduites tubulaires flexibles, par exemple du type comportant un treuil linéaire multi-chenilles ne sort pas du cadre de la présente invention.

Lors de la fin de la pose de la conduite tubulaire rigide on est obligé de respecter les contraintes mécaniques maximales que peut supporter une telle conduite. Par exemple, on attache des moyens de fixation à l'extrémité de la conduite tubulaire rigide. Ces moyens de fixation comportent par exemple une bride. Les moyens de fixation permettent de solidariser l'extrémité de la conduite tubulaire rigide avec des moyens de retenue destinés à empêcher que la conduite tubulaire rigide ne subisse une flexion d'un rayon de courbure trop faible. On utilise par exemple des câbles d'acier.

La conduite tubulaire rigide est avantageusement inclinée par exemple d'un angle compris entre 10 et 30°, typiquement 20°, à l'extrémité de la barge. Un dispositif de support en forme de rampe inclinée appelé "stinger" en terminologie anglo-saxonne, est utilisé à cet effet.

Une fois la conduite tubulaire flexible raccordée à l'extrémité de la conduite tubulaire rigide, on effectue la descente simultanée de l'extremité terminale de la conduite tubulaire rigide et de la conduite tubulaire flexible. Par exemple, on déroule avec des treuils les câbles retenant la conduite tubulaire rigide. Pendant la descente, la conduite tubulaire rigide prend une forme à simple concavité, sans point d'inflexion, du type chaînette. La conduite tubulaire flexible, retenue à une extrémité par son raccordement avec la conduite rigide, elle-même retenue par les câbles qui retiennent la conduite tubulaire rigide et ayant son autre extrémité retenue à partir du navire de pose, fléchit sous son propre poids et prend sensiblement la forme d'une chaînette. L'extension horizontale de la chaînette peut être réglée, et notamment réduite, par le déplacement de la barge de pose. Avantageusement, lorsque l'extrémité de la conduite tubulaire rigide atteint le fond, on déconnecte et l'on remonte le câble à la surface.

Dans une variante de réalisation, on utilise la conduite tubulaire flexible elle-même comme moyen de retenue destiné à garantir, lors de la pose de la conduite tubulaire rigide, qu'elle ne subira pas une flexion d'un rayon de courbure trop faible. Dans un tel cas, la conduite tubulaire flexible doit pouvoir résister à un effort de traction exercé par le poids apparent dans l'eau de la conduite tubulaire rigide. Cet effort peut par exemple être supporté par des conduites tubulaires flexibles classiques de diamètre interne important pour des faibles profondeurs d'eau. On peut aussi utiliser des conduites tubulaires flexibles spécialement renforcées pour pouvoir résister à des efforts de traction très importants. Par exemple, on augmente le nombre de couches d'armure de résistance à la traction, ou on augmente la section du fil d'armure utilisé. Il est bien entendu que seule la section destinée à la pose sur le fond de la conduite tubulaire rigide a besoin d'être renforcée. La pose de la conduite tubulaire flexible pourra être poursuivie avec des sections de conduites tubulaires flexibles non spécialement renforcées pour résister à l'effort des tractions correspondant au poids apparent dans l'eau de la conduite tubulaire rigide.

Les caractéristiques de l'invention font l'objet de la revendication 1.

L'invention sera mieux comprise au moyen de la description ci-après des figures annexées données comme des exemples non limitatifs parmi lesquels :
- la figure 1 est un schéma illustrant le procédé selon la présente invention utilisant une pince mobile immergée et une pince fixe;
- la figure 2 est un schéma illustrant la mise en oeuvre du procédé selon la présente invention utilisant deux pinces immergées;
- la figure 3 est un schéma illustrant la pose de conduites tubulaires flexibles raccordées à un tronçon de conduites tubulaires flexibles posées en mettant en oeuvre le procédé selon la présente invention.
- la figure 4 est un schéma illustrant une variante de mise en oeuvre du procédé selon la présente invention dans laquelle la conduite tubulaire flexible joue le rôle d'un moyen de rétention de la conduite tubulaire rigide.

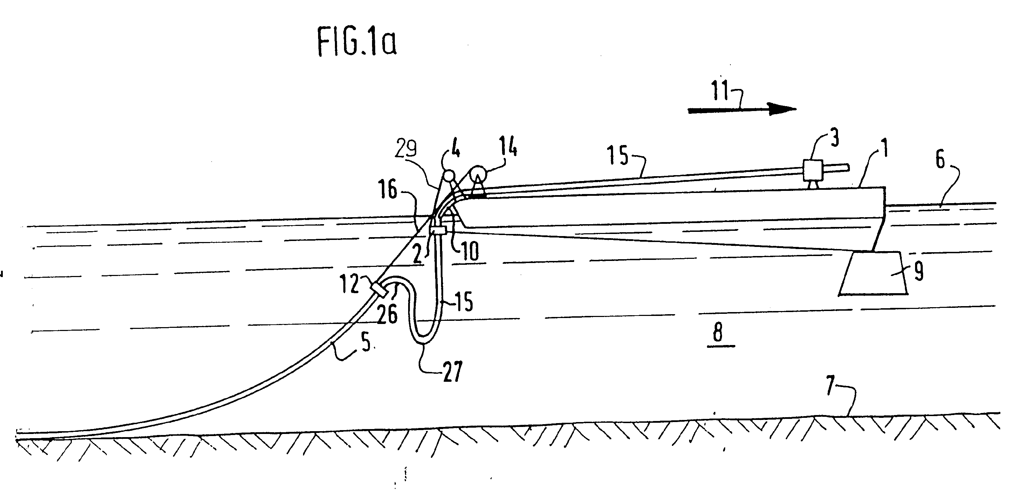

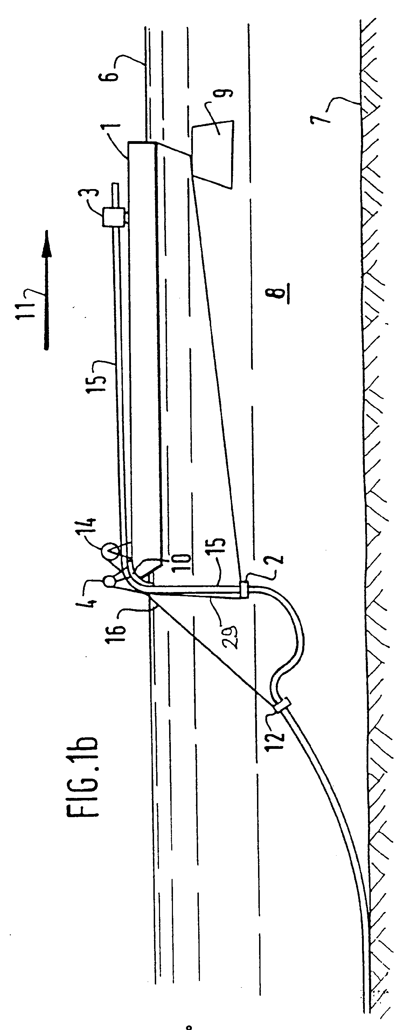

Sur les figures 1 à 4, on a utilisé les mêmes références pour désigner les mêmes éléments.

Sur la figure 1, on peut voir un exemple de pose d'une canalisation composée d'une conduite tubulaire rigide 5 et d'une conduite tubulaire flexible 15 raccordées l'une à l'autre. La longueur de la conduite tubulaire flexible 15 est légèrement supérieure à la profondeur P du fond 7. La longueur de la conduite tubulaire flexible 15 tient compte de la longueur nécessaire pour que cette conduite puisse former une chaînette lors de la pose de l'extrémité de la conduite tubulaire rigide. Une fois l'extrémité de la conduite rigide posée sur le fond par un premier support flottant, tel qu'une barge 1 de pose de conduites tubulaires rigides la poursuite de la pose de conduites tubulaires flexibles 15 sera avantageusement poursuivie par un navire spécialisé dans la pose de conduites tubulaires flexibles.

La conduite tubulaire rigide 5 est retenue par un moyen de retenue 12, par exemple une pince de serrage reliée par un câble 16 à un treuil 14. Le moyen de retenue 12 est placé au niveau de la connexion de la conduite tubulaire rigide 5 et de la conduite tubulaire flexible 15. La conduite tubulaire flexible 15 est retenue, d'une part par l'extrémité de la conduite rigide 5, et d'autre part par une pince mobile 2 et/ou par une pince fixe 3. La conduite tubulaire flexible 15 prend sensiblement une forme de chaînette sous l'effet de son poids.

Une fois que l'extrémité de la conduite tubulaire rigide a quitté le support flottant, par exemple la barge 1, le bateau ou le navire poseur, il est possible de "reculer" le support flottant (en sens opposé à la flèche 11) de façon à réduire la distance horizontale de la partie de conduite rigide suspendue pour passer d'une configuration en S à une chaînette simple concave sans point d'inflexion.

La conduite tubulaire flexible présente, au niveau du raccordement avec la conduite tubulaire rigide, une courbure de concavité inversée (en col de cygne).

La chaînette formée par la conduite tubulaire flexible se déforme progressivement au fur et à mesure de la descente. Au moment où la conduite tubulaire flexible touche le fond, elle forme une chaînette qui se raccorde tangentiellement à l'extrémité de la conduite tubulaire rigide.

Sur la figure 1a, on a illustré la pince mobile 2 dans sa position haute. Une fois la pince mobile 2 serrée autour de la conduite tubulaire flexible 15, la pince fixe 3 peut être déserrée. On effectue la descente simultanée de la conduite tubulaire rigide 5 en déroulant le câble 16 à partir du treuil 14, et la descente de la conduite tubulaire 15 en déroulant un deuxieme câble 29 à partir du treuil 4.

Sur la figure 1b, on a illustré la pince 2 dans sa position basse. A ce moment là, on serre la pince fixe 3 autour de la conduite tubulaire flexible 15 et on effectue la remontée de la pince mobile 2. Dans l'exemple illustré sur la figure 1, la pince fixe 3 est située près de l'avant (selon le sens de la flèche 11) du bateau 1. Dans la pratique cela n'est pas du tout nécessaire. Au fur et à mesure que l'on descend la conduite tubulaire flexible 15, celle-ci est déroulée, par exemple à partir des moyens de stockage de type "panier" ou "touret" (non représenté sur la figure 1). Lorsque la pince mobile 2 a atteint sa position basse, on effectue le serrage de la pince fixe 3. On ouvre alors la pince 2 et en enroulant le câble 29 sur le treuil 4, on assure la remontée de la pince mobile 2. On se retrouve en début du cycle illustré sur la figure 1a.

Avantageusement, lorsque la pince 12 a atteint le fond 7, on provoque sa libération et sa remontée avec le treuil 14.

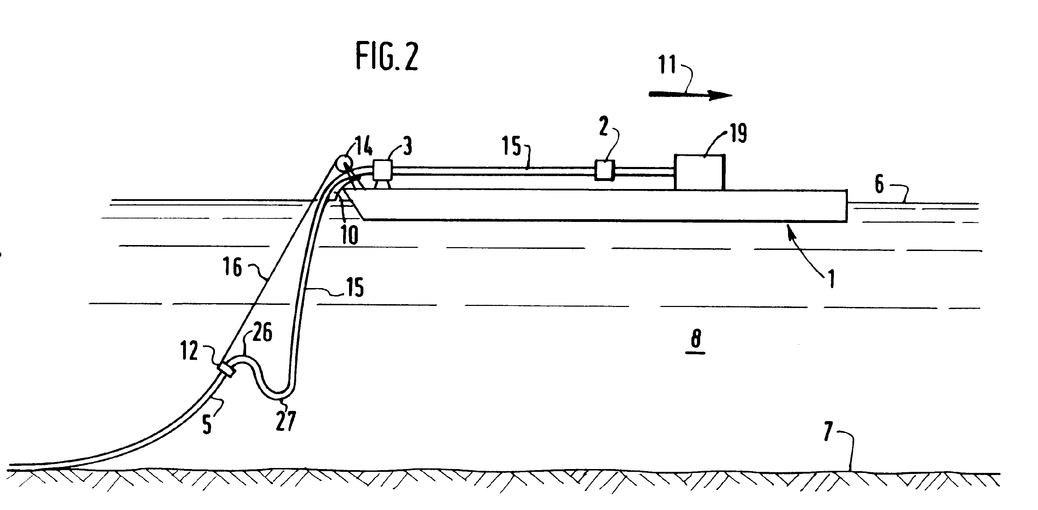

Sur la figure 2, on peut voir la mise en oeuvre du procédé selon la présente invention utilisant une pluralité de pinces placées sur le pont de la barge 1. Dans l'exemple illustré, deux pinces, l'une fixe 3, l'autre mobile 2, fixées sur le pont de la barge 1, relâchées alternativement, permettent la pose de la conduite tubulaire flexible 15. Simultanément, le déroulement du câble 16 à partir du treuil 14 permet la pose de la conduite tubulaire rigide 5. Dans l'exemple illustré sur la figure 2, la conduite tubulaire flexible 15 est déroulée à partir d'un moyen de stockage 19.

Dans une variante du procédé selon l'invention, on effectue l'abandon sur le fond de la deuxième extrémité de la conduite tubulaire flexible 15. Avantageusement, une telle extrémité abandonnée sur le fond comportera des moyens facilitant sa récupération comme par exemple des dispositifs de connexion et/ou des moyens de localisation. Les moyens de localisation comporteront par exemple une balise sonar. On utilisera par exemple une balise sonar passive pour des abandons de longue durée, et une balise sonar active pour des abandons de courte durée.

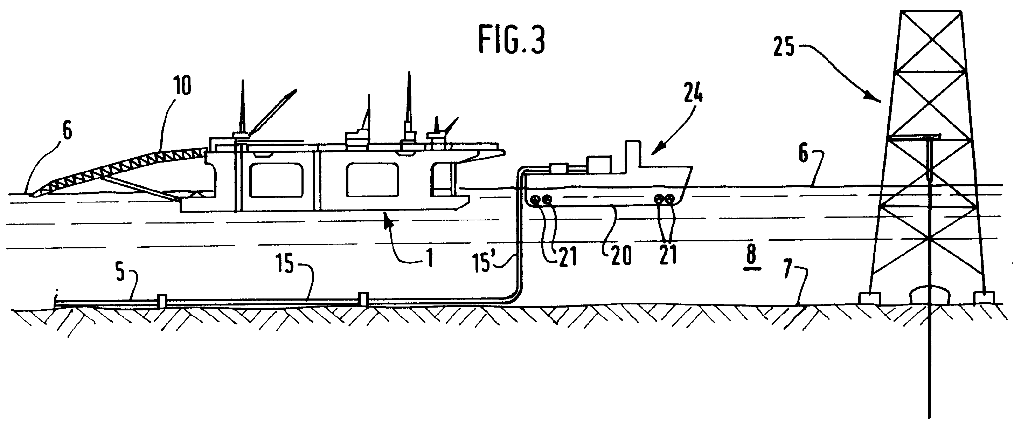

Dans une variante particulièrement avantageuse du procédé selon l'invention, une fois l'extrémité de la conduite tubulaire rigide reposant sur le fond, on transborde la seconde extrémité de la conduite tubulaire flexible 15 disponible sur le support flottant 1, sur un deuxième support de pose tel qu'un navire spécialisé dans la pose de conduites tubulaires flexibles, par exemple comme illustré sur la figure 3, un navire 24 de pose rapide comportant des moyens de positionnement dynamique 21. La suite des opérations de pose de conduites tubulaires flexibles sera opérée par l'intermédiaire de ce navire (comme illustré sur la figure 3). Pour effectuer les transbordements de la conduite tubulaire flexible du premier support flottant 1, par exemple d'une barge vers un second support flottant, par exemple un navire 24, on fait passer avantageusement entre la barge 1 et le navire 24 d'abord un câble d'acier à l'extrémité duquel on solidarise l'extrémité de la conduite tubulaire flexible à transborder. Cette solidarisation est effectuée par exemple par l'intermédiaire d'une bride. Une traction sur le câble, par exemple par l'intermédiaire d'un treuil installé sur le navire 24 permet d'amener l'extrémité de la conduite tubulaire flexible à bord du second support flottant.

Un tel navire pourra poser une grande longueur de conduite tubulaire flexible 15′ raccordée à la conduite tubulaire 15 posée par la barge 1 et/ou se rapprocher d'une plate-forme de forage ou de production 25 sans présenter de danger de collision avec celle-ci.

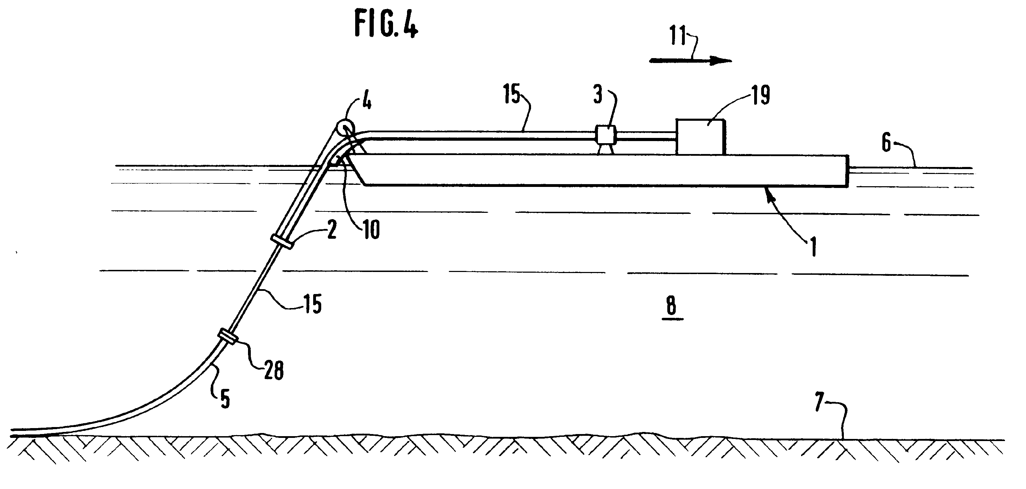

Sur la figure 4, on peut voir un exemple de mise en oeuvre d'un procédé de pose selon la présente invention pour lequel la conduite tubulaire flexible 15 assure la retenue de la conduite tubulaire rigide 5. Les conduites 5 et 15 sont solidarisées par un moyen de connection 28, par exemple comportant des brides. Par exemple une première bride est soudée à l'extrémité de la conduite rigide 5. Une seconde bride est fixée à l'extrémité de l'embout, non représenté, fixé sur la conduite tubulaire flexible 15.

## Revendications

1. Procédé de pose, sur un fond se trouvant à une profondeur P, notamment un fond marin, d'une canalisation formée de conduites tubulaires raccordées, comportant l'étape consistant à :
- poser à partir d'un premier support flottant (1), sur le fond une longueur de conduite tubulaire rigide (5) dont l'extrémité terminale est retenue par ledit premier support flottant ;
caractérisé par le fait qu'il comporte les étapes consistant à :
- charger sur le premier support flottant une longueur de conduite tubulaire flexible supérieure à la profondeur P ;
- connecter à l'extrémité terminale libre de ladite conduite tubulaire rigide (5) une première extrémité de ladite conduite tubulaire flexible (15) d'une longueur supérieure à la profondeur P ;
- descendre simultanément l'extrémité terminale de la conduite tubulaire rigide (5) et la conduite tubulaire flexible (15) ;
- poursuivre la descente jusqu'à ce que la première extrémité de la conduite tubulaire flexible connectée à l'extrémité terminale de la conduite tubulaire rigide se trouve sur le fond (7) et où la seconde extrémité de la conduite flexible (15) se trouve encore à bord du premier support flottant (1) ;
- transférer ladite seconde extrémité de la conduite tubulaire flexible (15) sur un deuxième support flottant (24), en vue de connecter à ladite seconde extrémité de la conduite tubulaire flexible (15) l'extrémité d'une autre conduite tubulaire flexible (15′) et poser sur le fond (7) la section de canalisation comportant lesdites conduites tubulaires flexibles (15,15′).

2. Procédé selon la revendication 1, caractérisé par le fait que l'étape consistant à transférer ladite seconde extrémité de la conduite tubulaire flexible (15) comprend le transbordement de ladite extrémité du premier support flottant (1) au second support flottant (24).

3. Procédé selon la revendication 1, caractérisé par le fait que l'étape consistant à transférer ladite seconde extrémité de la conduite tubulaire flexible (15) est mise en oeuvre après une étape consistant à abandonner la conduite tubulaire flexible (15) à partir dudit premier support flottant, ladite étape de transfert comportant une étape consistant à récupérer par le deuxième support flottant (24) la conduite tubulaire flexible (15) abandonnée par ledit premier support flottant (1).

4. Procédé selon l'une quelconque des revendications 1 à 3, caractérisé par le fait que ledit premier support flottant (1) est une barge de pose de conduites tubulaires rigides (5).

5. Procédé selon la revendication 4, caractérisé par le fait que la barge de pose de conduites tubulaires rigides (5) est une barge de pose en S comportant une rampe support (10) de conduite tubulaire rigide (5).

6. Procédé selon l'une quelconque des revendications 1 à 5, caractérisé par le fait que ledit deuxième support flottant (24) est un navire spécialisé de pose de conduites tubulaires flexibles.

7. Procédé selon l'une quelconque des revendications précédentes, caractérisé par le fait qu'il comporte une étape consistant à fixer des moyens de retenue, tels qu'un câble de traction (16), à l'extrémité de la conduite tubulaire rigide (5) par l'intermédiaire de moyens de fixation (12), les moyens de retenue étant mis en oeuvre à partir du premier support flottant (1).

8. Procédé selon l'une quelconque des revendications 1 à 6, caractérisé par le fait que la conduite tubulaire flexible (15) assure la retenue de la conduite tubulaire rigide (5) pendant l'opération de pose.

## Patentansprüche

1. Verfahren zum Verlegen eines Leitungssystems, das aus verbundenen Hohlleitungen gebildet ist, auf einem Grund einer Tiefe P, insbesondere einem Meeresgrund, mit folgendem Schritt:
ausgehend von einem ersten schwimmenden Träger (1), Ablegen einer Länge einer starren Hohlleitung (5), deren äußeres Ende von dem schwimmenden Träger gehalten wird, auf den Grund,
gekennzeichnet durch folgende Schritte:
Beladen des ersten schwimmenden Trägers mit einer flexiblen Hohlleitung einer Länge, die größer als die Tiefe P ist,
Verbinden eines ersten Endes der flexiblen Hohlleitung (15) der Länge, die größer als die Tiefe P ist, mit dem freien äußeren Ende der starren Hohlleitung (5),
Herablassen des äußeren Endes der starren Hohlleitung (5) gleichzeitig mit der flexiblen Hohlleitung (15),
Weiterführen des Herablassens, bis sich das erste Ende der flexiblen Hohlleitung, das mit dem äußeren Ende der starren Hohlleitung verbunden ist, auf dem Grund (7) befindet, während sich das zweite Ende der flexiblen Hohlleitung (15) noch an Bord des ersten schwimmenden Trägers (1) befindet,
Übertragen des genannten zweiten Endes der flexiblen Hohlleitung (15) auf einen zweiten schwimmenden Träger (24), um mit dem genannten zweiten Ende der flexiblen Hohlleitung (15) das Ende einer anderen flexiblen Hohlleitung (15′) zu verbinden und den Abschnitt des Leitungssystems, der die genannten flexiblen Hohlleitungen (15, 15′) umfaßt, auf dem Grund (7) zu verlegen.

2. Verfahren nach Anspruch 1, dadurch gekennzeichnet, daß der aus dem Übertragen des genannten zweiten Endes der flexiblen Hohlleitung (15) bestehende Schritt das Umladen des genannten Endes von dem ersten schwimmenden Träger (1) auf den zweiten schwimmenden Träger (24) umfaßt.

3. Verfahren nach Anspruch 1, dadurch gekennzeichnet, daß der aus dem Übertragen des genannten zweiten Endes der flexiblen Hohlleitung (15) bestehende Schritt nach einem Schritt, der aus dem Aufgeben der flexiblen Hohlleitung (15) von dem ersten schwimmenden Träger besteht, durchgeführt wird, wobei der genannte Übertragungsschritt einen Schritt umfaßt, der in dem Wiedergewinnen der von dem genannten ersten schwimmenden Träger (1) aufgegebenen flexiblen Hohlleitung (15) durch den zweiten schwimmenden Träger (24) besteht.

4. Verfahren nach einem der Ansprüche 1 bis 3, dadurch gekennzeichnet, daß der erste schwimmende Träger (1) eine Verlegeplattform für starre Hohlleitungen (5) darstellt.

5. Verfahren nach Anspruch 4, dadurch gekennzeichnet, daß die Verlegeplattform für starre Hohlleitungen (5) eine Plattform zum S-förmigen Verlegen darstellt, die eine Stützrampe (10) für starre Hohlleitungen (5) aufweist.

6. Verfahren nach einem der Ansprüche 1 bis 5, dadurch gekennzeichnet, daß der genannte zweite schwimmende Träger (24) ein auf das Verlegen von flexiblen Hohlleitungen spezialisiertes Wasserfahrzeug ist.

7. Verfahren nach einem der vorhergehenden Ansprüche, gekennzeichnet durch einen Schritt zum Befestigen einer Halteeinrichtung, wie beispielsweise eines Zugseils (16), an dem Ende der starren Hohlleitung (5) mittels einer Befestigungseinrichtung (12), wobei die Halteeinrichtung von dem ersten schwimmenden Träger (1) in Betrieb gesetzt wird.

8. Verfahren nach einem der Ansprüche 1 bis 6, dadurch gekennzeichnet, daß die flexible Hohlleitung (15) während des Verlegebetriebs das Halten der starren Hohlleitung (5) sicherstellt.

## Claims

1. A method of laying on a bottom, in particular a sea bed, situated at a depth P, a pipeline formed of joined tubular conduits, including the step consisting of :
- laying on the bottom from a first floating support (1) a length of a rigid tubular conduit (5) whose terminal end is retained by the said first floating support, characterized in that it includes the steps consisting of :
- loading on the first floating support (1) a length of a flexible tubular conduit that exceeds the depth P;
- connecting to the free terminal end of the said rigid tubular conduit (5), a first end of the said flexible tubular conduit (15) of a length that exceeds the depth P;
- simultaneously lowering the terminal end of the rigid tubular conduit (5) and the flexible tubular conduit (15);
- continuing with the lowering until the first end of the flexible tubular conduit connected to the terminal end of the rigid tubular conduit is situated on the bottom (7), and when the second end of the flexible tubular conduit (15) is still situated on board the first floating support (1);
- transferring the said second end of the flexible tubular conduit (15) onto a second floating support (24) with a view to connecting to the said second end of the flexible tubular conduit (15), the end of another flexible tubular conduit (15′) and in laying on the bottom (7) the section of the pipeline comprising the said flexible tubular conduits (15, 15′).

2. A method according to claim 1, characterized in that the step lying in transferring the said second end of the flexible tubular conduit (15) includes conveying over the said end from the first floating support (1) to the second floating support (24).

3. A method according to claim 1, characterized in that the step lying in transferring the said second end of the flexible tubular conduit (15) is effected after a step lying in abandoning the flexible tubular conduit (15) from the said first floating support, the said transfer step including a step lying in recovering the flexible tubular conduit (15) that has been abandoned by the said first floating support (1) by the second floating support (24).

4. A method according to any one of claims 1 to 3, characterized in that the said first floating support (1) is a barge for laying rigid tubular conduits (5).

5. A method according to claim 4, characterized in that the barge for laying the rigid tubular conduit (5) is a barge for laying in the S mode, including a ramp (10) for supporting the rigid tubular conduit (5).

6. A method according to any one of claims 1 to 5, characterized in that the said second floating support (24) is a vessel specialized for laying flexible tubular conduits.

7. A method according to any one of the preceding claims, characterized in that it includes a step consisting of fixing retaining means such as a traction cable (16) to the end of the rigid tubular conduit (5) by means of fastening means (12), the retaining means being operated from the first floating support (1).

8. A method according to any one of claims 1 to 6, characterized in that the flexible tubular conduit (15) ensures the retention of the rigid tubular conduit (5) during the laying operation.
